Europäisches Patentamt

**European Patent Office**

**Office européen des brevets**

(19)

(11) Numéro de publication: **0 003 702**

**B1**

(12)

# FASCICULE DE BREVET EUROPEEN

(21) Numéro de dépôt: **79400074.5**

(22) Date de dépôt: **06.02.79**

(51) Int. Cl.³: **B 23 K 9/28**

(54) **Torche de soudage à nettoyage mécanique et pneumatique.**

(30) Priorité: **08.02.78 FR 7803458**

(43) Date de publication de la demande:
**22.08.79 Bulletin 79/17**

(45) Mention de la délivrance du brevet:
**25.02.81 Bulletin 81/8**

(84) Etats Contractants Désignés:
**BE DE FR GB IT LU NL**

(56) Documents cités:
**DE - B - 1 047 963**
**FR - A - 727 589**
**FR - A - 1 488 981**
**FR - A - 1 583 147**
**US - A - 2 833 913**
**US - A - 3 238 349**
**US - A - 3 493 717**

(73) Titulaire: **LA SOUDURE AUTOGENE FRANCAISE**
**75, Quai d'Orsay**
**F-75321 Paris Cedex 07 (FR)**

(84) Etats Contractants Désignés:
**BE DE FR GB LU NL**

(73) Titulaire: **L'AIR LIQUIDE, SOCIETE ANONYME**
**POUR L'ETUDE ET L'EXPLOITATION DES**
**PROCEDES GEORGES CLAUDE**
**75, Quai d'Orsay**
**F-75321 Paris Cedex 07 (FR)**

(84) Etats Contractants Désignés:
**IT**

(72) Inventeur: **Feix, Jacques**
**5, rue des Sablons**
**F-95310 Saint Ouen L'aumone (FR)**

(72) Inventeur: **Cardot, Frédéric**
**5, Allée de Beauvais**
**F-78570 Andresy (FR)**

(74) Mandataire: **Liboz, André et al,**
**L'AIR LIQUIDE SOCIETE ANONYME POUR**
**L'ETUDE ET L'EXPLOITATION DES PROCEDES**
**GEORGES CLAUDE 75, Quai d'Orsay**
**F-75321 Paris Cédex 7 (FR)**

Torche de soudage à nettoyage mécanique et pneumatique

La présente invention concerne essentiellement une torche de soudage électrique à atmosphère neutre de protection et électrode fusible, comportant un premier ensemble de révolution traversé axialement par l'électrode et muni d'un grattoir, un second ensemble disposé coaxialement et extérieurement au premier ensemble et une chambre annulaire située entre lesdits ensembles et munie, à l'une de ses extrémités, d'une ouverture, ladite chambre annulaire étant parcourue, pendant les opérations de soudage, par le gaz de protection qui sort par ladite ouverture et lesdits ensembles étant mobiles axialement en translation l'un par rapport à l'autre pendant les opérations de nettoyage de façon que le grattoir traverse l'extrémité dudit second ensemble qui forme l'ouverture précitée en détachant mécaniquement de la paroi qui est voisine de l'ouverture les particules de métal qui s'y sont déposées.

On sait que dans le procédé de soudage mis en oeuvre par ce type de torche, dit procédé MIG, le transfert de métal fondu dans l'arc se fait, la plupart du temps, sous forme de fines gouttelettes qui remontent en partie vers le haut et sont projetées en direction de la torche. Certaines de ces projections se déposent à la partie inférieure de la buse qui constitue, avec le tube de guidage et d'alimentation en courant électrique de l'électrode, l'ouverture de la chambre annulaire précitée servant à l'adduction du gaz de protection et forment un agglomérat de particules fortement adhérentes qui risquent d'obturer totalement cette ouverture et d'empêcher par conséquent le passage du gaz de protection. D'autres projections pénètrent à l'intérieur de la torche, c'est-à-dire dans la chambre d'adduction précitée, jusqu'en son fond et se déposent ainsi sur la totalité des parois de cette dernière sous forme de particules qui sont faiblement adhérentes mais qui gênent néanmoins, à la longue, le passage du gaz de protection. Ces particules risquent en outre d'établir la communication électrique entre le premier ensemble qui est normalement au contact avec l'électrode et est par conséquent au potentiel de cette dernière et le second ensemble qui est normalement isolé du premier ensemble. Il en résulte une mise à la masse de l'électrode.

On connaît, par le US—A—2,833,913, une torche de soudage électrique à atmosphère de protection et à électrode fusible munie de moyens de nettoyage constitués par un piston racleur mobile en translation et agissant sur la paroi qui est voisine de l'ouverture pour détacher mécaniquement les particules qui y adhèrent. Ce système ne réalise qu'un nettoyage assez grossier, limité à la seule partie inférieure de la buse, c'est-à-dire à l'ouverture de la chambre annulaire et est totalement inefficace pour éliminer les particules qui ont pénétré à l'intérieur de cette chambre et adhèrent à ses parois.

On connaît également, par le FR—A—1.583.147, un chalumeau de soudage comportant un dispositif intérieur de nettoyage des éclaboussures de soudure constitué par des brosses fixées à l'extrémité d'un piston animé d'un mouvement alternatif. Ce dispositif a pour fonction d'assurer le nettoyage d'un tube de canalisation de gaz de protection qui est séparé du tube de contact servant au passage du fil de soudage par l'intermédiaire duquel est amené le courant électrique. Un tel dispositif de nettoyage suppose que le tube à nettoyer permet le libre passage du piston et son application à une chambre traversée par une électrode est impossible. De plus, les brosses en fil de laiton ne peuvent assurer le détachement des particules qui adhèrent fortement à la paroi de la canalisation.

On a proposé également de munir certaines torches d'un système de soufflage, par exemple de soufflage d'air comprimé, à l'intérieur de la chambre d'adduction du gaz de protection. Ce système nécessite, pour être efficace, une source de gaz comprimé sous une pression relativement importante (de l'ordre de 12 bars), encore ce soufflage n'est-il vraiment opérant que pour les particules faiblement adhérentes, son action étant totalement nulle sur les agglomérats fortement adhérents qui se forment à l'extrémité de la buse. Des torches de ce type sont utilisées actuellement dans l'industrie.

On connaît enfin, par le FR—A—1.488.981, un pistolet de soudage électrique muni intérieurement d'un manchon de guidage traversé par le fil-électrode, ce manchon est en matière isolante de façon à éviter les court-circuits dus aux projections de métal à l'intérieur du pistolet. Un tel manchon ne permet pas l'amenée du courant électrique au fil-électrode.

L'invention a pour but de pallier les inconvénients susmentionnés et propose à cet effet une torche dont le second ensemble précité comporte un conduit d'amenée de gaz de soufflage débouchant tangentiellement dans ladite chambre annulaire, à l'extrémité opposée à l'ouverture précitée, ledit conduit étant alimenté en gaz de soufflage, sous une pression maximale de six bars, pendant toute la durée d'une opération de nettoyage au cours de laquelle lesdits ensembles sont entraînés en translation relative, de façon que le courant de gaz de soufflage qui balaie ladite chambre annulaire détache pneumatiquement les particules déposées sur ses parois et les évacue par ladite ouverture ainsi que celles qui ont été détachées mécaniquement par le grattoir.

Le fait de combiner une action mécanique et une action pneumatique permet de détacher toutes les particules, même fortement adhérentes, qui adhèrent aux parois de la chambre annulaire en un endroit quelconque de ces parois et de les éjecter hors de ladite chambre, assurant ainsi un nettoyage intégral de la torche.

Selon une autre caractéristique de l'invention le conduit d'amenée du gaz de soufflage constitue également le conduit d'adduction du gaz de protection.

Cette disposition assure un balayage de la totalité de la chambre.

Selon une autre caractéristique de l'invention, le déplacement desdits ensembles l'un par rapport à l'autre est réalisé au moyen d'un vérin pneumatique.

L'entraînement en translation relative des deux ensembles, donc du grattoir, par un vérin pneumatique, permet d'obtenir automatiquement une action de raclage particulièrement efficace.

D'autres caractéristiques et avantages de l'invention apparaîtront au cours de la description qui va suivre.

Dans les dessins annexés donnés uniquement à titre d'exemple non limitatif:
— la figure 1 est une coupe axiale d'une torche selon l'invention en position de fonctionnement de soudage,
— la figure 2 est une représentation de la coupe axiale de la figure 1, le premier et le second éléments étant simplement indiqués sous forme silhouettée, la torche étant représentée au cours de l'opération de nettoyage,
— la figure 3 est une coupe selon la ligne III—III de la figure 1,
— la figure 4 est une coupe partielle selon la ligne IV—IV de la figure 3.

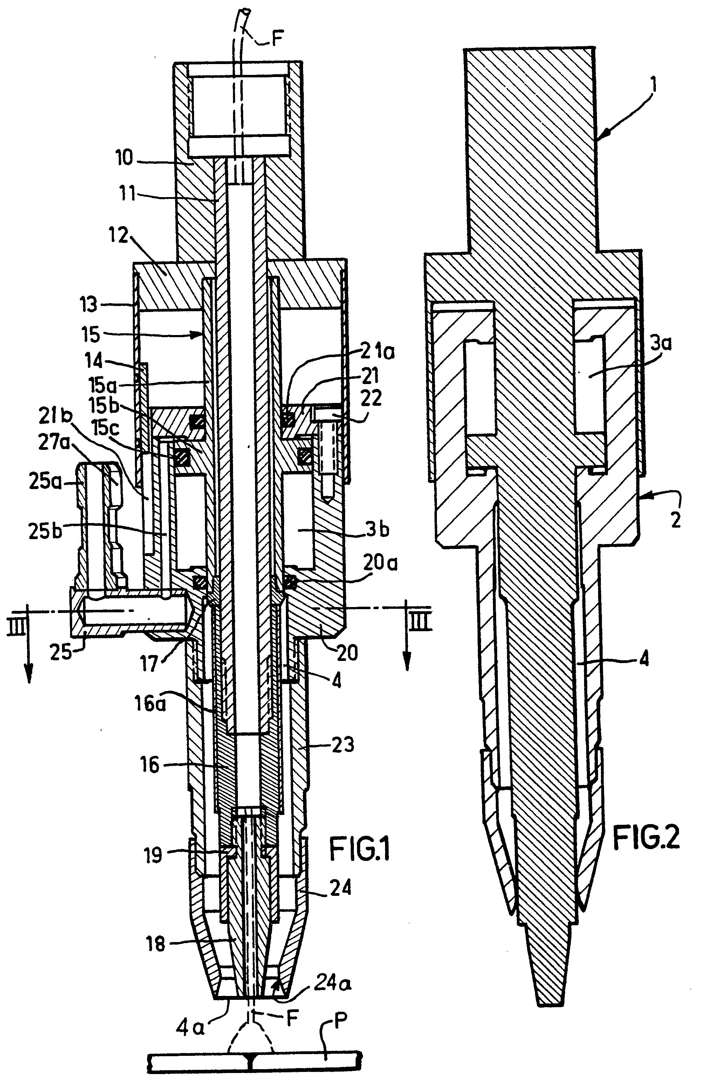

Selon le mode de réalisation représenté sur les dessins, la torche conforme à l'invention est formée essentiellement de deux ensembles d'éléments: un ensemble fixe 1 représenté schématiquement à la figure 2 et constitué par les éléments 10 à 19 de la figure 1 et un ensemble mobile 2 représenté également schématiquement à la figure 2 et constitué par les éléments 20 à 27 de la figure 1. Les deux ensembles 1 et 2 forment un vérin pneumatique, le piston, qui fait partie de l'ensemble fixe 1, étant logé à l'intérieur d'un corps creux qui fait partie de l'ensemble mobile 2 et partageant ce corps creux en deux chambres 3a et 3b dans lesquelles est admis le gaz d'actionnement sous pression. L'ensemble mobile 2 entoure partiellement l'ensemble fixe 1 à la partie inférieure de la torche, de sorte qu'une chambre annulaire 4 d'adduction de gaz de protection est ménagée entre les deux ensembles, ce gaz de protection formant à l'ouverture 4a de la chambre 4, pendant les opérations de soudage, une colonne gazeuse protectrice qui entoure l'électrode.

L'ensemble fixe 1 comporte, à sa partie supérieure, un support creux 10, par exemple en cuivre, qui permet le montage de la torche sur une partie électriquement isolée du bâti d'une machine, par exemple sur un collier servant également d'organe d'amenée de courant électrique pour l'alimentation de l'électrode fusible F.

Sur le support 10 est monté un manchon tubulaire 11, par exemple en laiton, qui traverse une pièce électriquement isolante en forme de disque 12, faite par exemple, en le matériau connu sous la marque "CELORON", sur laquelle est fixée une jupe ou chemise protectrice 13 en matériau quelconque. Sur la paroi interne de la jupe 13 est monté un patin 14 dont la fonction sera expliquée ci-après.

Coaxialement au manchon 11 et extérieurement à celui-ci, est monté un piston 15, lui-même tubulaire, constitué par une partie 15a en forme de tige et une partie 15b ayant la forme d'un plateau de section circulaire et muni, sur son pourtour, d'un joint d'étanchéité 15c. Ce piston peut être par exemple en aluminium.

A la partie enférieure du manchon tubulaire 11 est fixé, par exemple vissé, un second manchon tubulaire 16 qui peut être également en laiton; le second manchon tubulaire 16 maintient, par l'intermédiaire d'une bague de centrage 17 en matériau isolant, le piston 15 qui prend appui, par la partie supérieure de la tige 15a, contre la pièce 12. Du fait de son appui sur la bague 17 et la pièce 12 toutes deux isolantes et du fait que le diamètre interne de la tige 15a est notablement supérieur au diamètre externe du manchon 11, le piston 15 est électriquement isolé dudit manchon.

A la partie inférieure du second manchon tubulaire 16 est fixé, par exemple vissé, un tube 18 fait en métal hautement conducteur tel que le cuivre, dit tube-contact, qui sert à transmettre le courant de soudage au fil électrode F et assure en même temps le guidage de ce dernier.

A la partie inférieure du manchon tubulaire 16 et maintenu par le tube-contact 18, est monté également un grattoir 19 fait en un alliage cuivreux très dur, par exemple en cupro-chrome. Ce grattoir sert à détacher les particules métalliques fortement adhérentes qui se trouvent à l'extrémité inférieure de la chambre 4 comme il sera expliqué ci-après. Le canal interne formé par les manchons 11 et 16 et le tube 18 sert au passage du fil électrode fusible F qui est entraîné en translation continue par un dispositif non représenté et émerge à l'extrémité inférieure de la torche jusqu'à la pièce à souder P.

Le manchon tubulaire 16 est revêtu sur son pourtour d'une couche d'alumine 16a électriquement isolante et ayant une épaisseur de 5/10 mm environ.

L'ensemble mobile 2 comporte un corps métallique creux 20 fermé, à sa partie supérieure, par un couvercle également métallique 21 fixé au moyen de vis telles que 22.

Le corps creux 20 et son couvercle 21 sont traversés par le piston 15, le plateau 15a de ce dernier se trouvant logé dans ledit corps creux et divisant son volume interne en les deux chambres 3a et 3b précédemment mentionnées. Des joints d'étanchéité 20a et 21a sont prévus respectivement sur le corps 20 et le couvercle 21 en contact avec la tige 15a, comme le joint d'étanchéité précité 15c est en contact avec la paroi interne dudit corps creux 20.

Le couvercle 21 et le corps creux 20 sont munis d'une rainure de guidage 21 b qui coopère avec le patin 14 pour empêcher la rotation de l'ensemble mobile par rapport à l'ensemble fixe.

A la partie inférieure du corps creux 20 est vissé un support de buse en laiton 23, la buse 24, en alliage cuivreux, étant elle-même vissée à la partie inférieure du support 23.

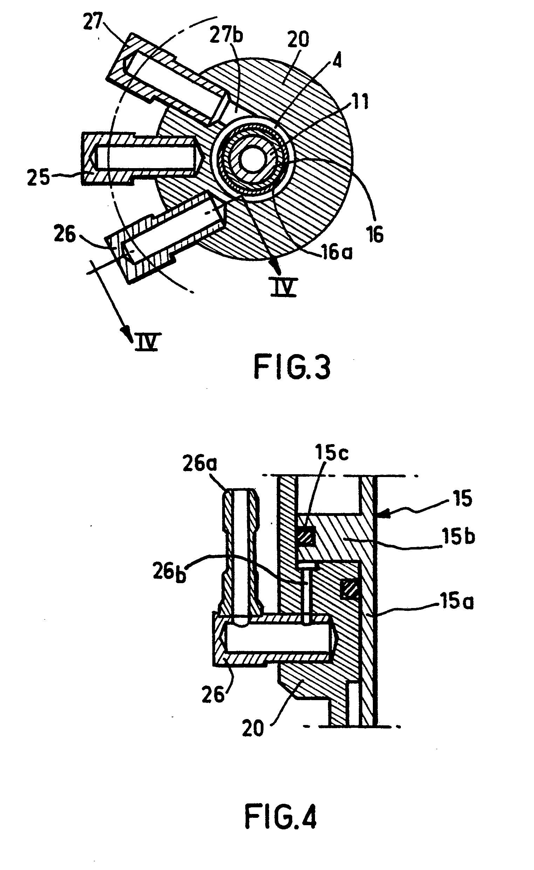

Sur le corps creux 20 sont montés (voir la figure 3) deux embouts 25, 26 pour l'admission du gaz comprimé d'actionnement du vérin pneumatique et un embout 27, servant à la fois à l'amenée du gaz de soufflage et à l'adduction du gaz de protection dans la chambre annulaire 4.

Les embouts 25 et 26 sont munis de raccords ou olives 25a et 26a respecivement et communiquent par des conduits, respectivement 25b (figure 1) et 26b (figure 4) prévus dans le corps 20, avec les chambres 3a et 3b précitées. Le gaz d'actionnement du vérin peut être constitué par exemple par de l'air comprimé délivré par une source non représentée.

L'embout 27 est muni d'un raccord ou olive 27a et communique, par un conduit 27b prévu dans le corps 20, avec la chambre 4, ledit conduit débouchant à la partie supérieure de la chambre et tangentiellement à ses parois. Le gaz de soufflage utilisé peut être constitué également par de l'air comprimé et délivré sous une pression de 6 bars environ. Lorsque ce gaz de soufflage est introduit par l'embout 27, il effectue dans la chambre 4, en raison de son arrivée tangentielle, un mouvement tourbillonnaire qui augmente son efficacité à entraîner les particules peu adhérentes qui collent sur ses parois.

Le fait d'introduire le gaz de soufflage et le gaz de protection par un même embout débouchant à la partie supérieure de la chambre 4 permet un nettoyage de cette dernière sur la totalité de sa hauteur. Ce fait permet également de simplifier la torche en éliminant la nécessité de prévoir des clapets anti-retour ce qui serait le cas si deux arrivées distinctes étaient prévues.

L'introduction des deux gaz par le même embout permet enfin d'éliminer toute trace de gaz de soufflage, par exemple d'air, au début d'une opération de soudage; il suffit pour cela d'envoyer, préalablement au soudage, une petite charge de gaz de protection dans la chambre 4, ce qui la vide du gaz de soufflage pouvant éventuellement y rester.

Le nettoyage de la torche selon l'invention, après une opération de soudage, est effectué de la façon suivante:

L'arrivée de gaz de protection étant interrompue, on alimente l'embout 27 en air comprimé de soufflage qui décolle et entraîne les projections peu adhérentes qui se trouvent sur les parois de la chambre 4. Après une seconde environ, on alimente le vérin pneumatique en air comprimé par l'embout 25 ce qui provoque le recul, c'est-à-dire le mouvement vers le haut, de l'élément mobile 2 (voir la figure 2). Lors de ce recul la paroi interne 24a de la buse 24 frotte contre le grattoir 19 ce qui a pour effet de décoller l'agglomérat de particules fortement adhérentes qui s'y est. formé.

Le vérin est ensuite alimenté en air comprimé par l'embout 26 ce qui a pour effet de ramener l'élément mobile 2 en position basse.

L'air de soufflage qui continue à arriver par l'embout 27 entraîne alors les particules détachées par le grattoir 19. Au bout d'une seconde environ après le retour de l'élément mobile, on arrête l'alimentation en air de soufflage.

On peut alors procéder à une nouvelle opération de soudage.

Il convient de remarquer que l'arrivée tangentielle du gaz de soufflage dans la chambre 4 permet de réduire sensiblement l'interstice entre l'élément mobile et l'élément fixe, donc de donner une faible section à ladite chambre et par conséquent de réduire l'encombrement de la torche et de diminuer la pression du gaz de soufflage. De plus, le fait d'avoir prévu une couche isolante 16a sur le manchon 16, permet, malgré cette section réduite de la chambre 4, d'éviter tout court-circuit entre l'ensemble fixe 1 et l'ensemble mobile 2, court-circuit qui pourrait être dû aux projections métalliques.

En raison de sa facilité de nettoyage, la torche selon l'invention peut être utilisée sans inconvénient en toutes positions, en particulier pour réaliser des soudures en plafond, soudures qui sont rendues très difficiles avec les torches connues jusqu'ici en raison de la pénétration rapide des projections dans la chambre d'adduction du gaz de protection.

De nombreuses variantes pourraient être apportées au mode de réalisation décrit et présenté sans pour autant sortir de l'invention.

**Revendications**

1. Torche de soudage électrique à atmosphère neutre de protection et électrode fusible, comportant un premier ensemble (1) de révolution traversé axialement par l'électrode (F) et muni d'un grattoir (19), un second ensemble (2) disposé coaxialement et extérieurement au premier ensemble (1) et une chambre annulaire (4) située entre lesdits ensembles et munie, à l'une de ses extrémités, d'une ouverture (4a), ladite chambre annulaire (4) étant parcourue, pendant les opérations de soudage, par le gaz de protection qui sort par ladite ouverture (4a) et lesdits ensembles (1 et 2) étant mobiles axialement en translation l'un par rapport à l'autre pendant les opérations de nettoyage de façon que le grattoir (19) traverse l'extrémité dudit second ensemble (2) qui forme l'ouverture (4a) précitée en détachant mécaniquement de la paroi (24a) qui est voisine de l'ouverture (4a) les particules de métal qui s'y son déposées, caractérisée en ce que le second ensemble (2) comporte un conduit (27b) d'amenée de gaz de soufflage débouchant tangentiellement dans ladite chambre annulaire (4), à l'extrémité opposée à l'ouverture précitée (4a), ledit conduit (27b) étant alimenté en gaz de soufflage, sous une pression maximale de six bars, pendant toute la durée d'une opération de nettoyage au cours de laquelle lesdits ensembles sont entraînés en translation relative, de façon que le courant de gaz de soufflage qui balaie ladite chambre annulaire (4) détache pneumatiquement les particules déposées sur ses parois et les évacue par ladite ouverture (4a) ainsi que celles qui ont été détachées mécaniquement par le grattoir (19).

2. Torche selon la revendication 1, caractérisée en ce que le conduit d'amenée du gaz de soufflage (27, 27a, 27b) constitue également le conduit d'adduction du gaz de protection.

3. Torche selon la revendication 1, caractérisée en ce que le deplacement desdits ensembles (1, 2) l'un par rapport à l'autre est réalisé au moyen d'un vérin pneumatique.

4. Torche selon la revendication 3, caractérisée en ce que le verin pneumatique précité comporte un piston fixe (15) formant partie du premier ensemble (1), ce piston étant logé dans une chambre (3a, 3b) d'un corps de torche mobile (20), formant partie du second ensemble (2) et muni d'embouts (25, 26) d'amenée de gaz comprimé pour l'actionnement dudit vérin.

5. Torche selon la revendication 1, caractérisée en ce que le premier ensemble (1) est recouvert, sur une partie au moins de son pourtour constituant l'une des parois de la chambre précitée (4), d'une couche électriquement isolante (16a).

## Claims

1. An electric welding torch with a neutral protection atmosphere and fusible electrode, comprising a first assembly of revolution (1) axially traversed by the electrode (F) and provided with a scraper (19), a second assembly (2) arranged co-axially and outside the first assembly (1) and an annular chamber (4) situated between the said assemblies and provided at one of its ends with an opening (4a), the said annular chamber (4) being traversed, during welding operations, by the protective gas which flows out of the said opening (4a) and the said assemblies (1 and 2) being axially movable in translation with respect to each other during the cleaning operations so that the scraper (19) traverses the end of the said second assembly (2) which forms the above-mentioned opening (4a) thereby mechanically detaching from the wall (24a), which is close to the opening (4a), the metal particles which are deposited thereon, characterised in that the second assembly (2) comprises a blown gas supply pipe (27b) opening tangentially into the said annular chamber (4) at the end opposite the said opening (4a), the said pipe (27b) being supplied by blown gas, under a maximum pressure of 6 bars, during the entire cleaning operation in the course of which the said assemblies are driven in relative translation, so that the current of blown gas which sweeps the said annular chamber (4) pneumatically detaches the particles deposited on its walls and evacuates them through said opening (4a) as also those which have been mechanically detached by the scraper (19).

2. Torch according to claim 1, characterised in that the blown gas supply pipe (27, 27a, 27b) also forms the pipe for admission of the protective gas.

3. Torch according to claim 1, characterised in that the displacement of the said assembles (1, 2) with respect to each other is effected by means of a pneumatic jack.

4. Torch according to claim 3, characterised in that the said pneumatic jack comprises a fixed piston (15) forming part of the first assembly (1), this piston being located in a chamber (3a, 3b) of a movable torch body (20), forming part of the second assembly (2) and provided with mouthpieces (25, 26) for the supply of compressed gas for operation of the said jack.

5. Torch according to claim 1, characterised in that the first assembly (1) is covered on at least one part of its circumference which constitutes one of the walls of the said chamber (4), by an electrically insulating layer (16a).

## Patentansprüche

1. Elektrischer Schweißbrenner mit neutraler Schutzatmosphäre und Schmelzelektrode, bestehend aus einer ersten Drehanordnung (1), durch welche axial die Elektrode (F) hindurchgeht und die mit einer Kratzeinrichtung (9) versehen ist, aus einer zweiten Anordnung (2), die koaxial und außerhalb der ersten Anordnung (1) angeordnet ist, und einer Ringkammer (4), die sich zwischen diesen Anordnungen (1, 2) befindet und an ihrem einen Ende mit einer Öffnung (4a) versehen ist, wobei die Ringkammer (4) während des Schweißens von dem Schutzgas durchströmt ist, welches aus dieser Öffnung (4a) herauskommt, und wobei die Anordnungen (1 und 2) während des Reinigungsbetriebes relativ zueinander axial verschieblich sind derart, daß die Kratzeinrichtung (19) durch dasjenige Ende der zweiten Anordnung (2) hindurchgeht, welches die Öffnung (4a) bildet, und dabei mechanisch von der Wand (24a), welche sich neben der Öffnung (4a) befindet, diejenigen Metallteilchen entfernt, die sich dort abgelagert haben, dadurch gekennzeichnet, daß die zweite Anordnung (2) eine Gebläsegaszuführleitung (27b) aufweist, welche tangential in die Ringkammer (4) am Ende gegenüber de Öffnung (4a) mündet und mit Gebläsegas unter einem maximalen Druck von 6 bar während der gesamten Dauer einer Reinigung vorsorgt wird, in deren Verlauf die Anordnungen relativ derart verschoben werden, daß die Strömung des Gebläsegases, welche die Ringkammer (4) bürstet, pneumatisch die Teilchen entfernt, die sich auf ihren Wänden abgelagert haben, und sie durch die Öffnung (4a) abführt, ebenso wie diejenigen Teilchen, die mechanisch durch die Kratzeinrichtung (19) entfernt worden sind.

2. Schweißbrenner nach Anspruch 1, dadurch gekennzeichnet, daß die Gebläsegaszuführleitung (27, 27a, 27b) ebenso die Zuführleitung für Schutzgas ist.

3. Schweißbrenner nach Anspruch 1, dadurch gekennzeichnet, daß die Verlagerung dieser Anordnungen (1, 2) relativ zueinander mittels einer pneumatischen Hebevorrichtung realisiert wird.

4. Schweißbrenner nach Anspruch 3, dadurch gekennzeichnet, daß die erwähnte pneumatische Hebevorrichtung einen festen Kolben (15) aufweist, der Teil der ersten Anordnung (1) bildet und in einer Kanner (3a, 3b) eines beweglichen Brennerteils (20) angeordnet ist, welches einen Teil der zweiten Anordnung (2) bildet und mit Zuführubergangsrohren (25, 26) für komprimiertes Gas zur Betätigung der Hebevorrichtung ausgestattet ist.

5. Schweißbrenner nach Anspruch 1, dadurch gekennzeichnet, daß die erste Anordnung (1) auf mindestens einem Teil ihres äußeren Umfanges, welcher eine der Wände der Kammer (4) bildet, mit einer elektrisch isolierenden Schicht (16a) bedeckt ist.

0 003 702

FIG.1

FIG.2

FIG.3

FIG.4